# EUROPÄISCHE PATENTSCHRIFT

(11) **EP 2 703 274 B1**
(45) Veröffentlichungstag und Bekanntmachung des Hinweises auf die Patenterteilung: **28.01.2015**
(21) Anmeldenummer: 13180850.3
(22) Anmeldetag: 19.08.2013
(51) Int. Cl.: B62K 21/12

(54) **Lenkervorbau**
Handlebar stem
Potence de guidon

(30) Priorität: 27.08.2012 DE 102012016907
(43) Veröffentlichungstag der Anmeldung: 05.03.2014
(73) Patentinhaber: Klieber, Jochen, 83342 Tacherting (DE)
(72) Erfinder: Klieber, Jochen, 83342 Tacherting (DE)
(74) Vertreter: Maiwald Patentanwalts GmbH

(56) Entgegenhaltungen:
- CN-Y- 2 571 661
- US-A1- 2002 157 499
- US-A1- 2003 066 376
- US-B1- 8 020 884

## Beschreibung

Die Erfindung betrifft einen Lenkervorbau, der auf dem Gabelschaft der Gabel eines Fahrrades festklemmbar ist. Heutzutage wird bei Mountainbikes, aber nicht nur, überwiegend ein Steuersatz nach dem Ahead-System eingesetzt, das ohne Vorbauschaft auskommt, da der Lenkervorbau direkt auf dem Gabelschaft festgeklemmt wird.

Ein derartiger Lenkervorbau (häufig auch einfach als Vorbau bezeichnet) weist eine Gabelschaftsklemmung auf, einen Lenkerklemmkopf, und ein die Gabelschaftsklemmung und den Lenkerklemmkopf verbindendes Verbindungsteil.

Hierbei kann das Verbindungsteil gegenüber der Gabelschaftsklemmung um einen kleinen Winkel abgewinkelt sein. Durch die zwei 180° entgegengesetzten Montagepositionen der Gabelschaftsklemmung an der Gabel ergibt sich so eine leicht erhöhte bzw. leicht erniedrigte Position des Lenkerklemmkopfes.

Hierbei ist typischerweise eine symmetrische Anordnung von Verbindungsteil und Lenkerklemmkopf vorgesehen, bei welcher sich die Längsmittelachse des Verbindungsteils und die quer dazu verlaufende Längsmittelachse des Lenkerklemmkopfes schneiden.

US 8020884 B zeigt ein Lenker vorbau mit einem einstückig ausgebildeten Haupteil, einem Sitzteil und einem Verbindungsteil, wobei das Verbindungsteil als in Querschnitt rechteckiges Hohlprofil ausgebildet ist.

Aus der DE 10 2005 059 554 A1 ist ein Lenkervorbau bekannt, der auf dem Gabelschaft der Gabel eines Fahrrades festklemmbar ist, und ein einstückig ausgebildetes Hauptteil aufweist, das eine Gabelschaftsklemmung aufweist, ein Sitzteil eines Lenkerklemmkopfes, und ein die Gabelschaftsklemmung mit dem Sitzteil des Lenkerklemmkopfes verbindendes Verbindungsteil, wobei das Verbindungsteil gegenüber der Gabelschaftsklemmung um einen festen Winkel abgewinkelt ist, zumindest ein Gegenstück für den Sitzteil des Lenkerklemmkopfes vorgesehen ist, und die Oberseite des Lenkerklemmkopfes höchstens 2 mm höher liegt als die Oberseite des Verbindungsteils. Bei diesem Lenkervorbau beträgt der Winkel zwischen dem Verbindungsteil und der Gabelschaftsklemmung 18°, und weist die Gabelschaftsklemmung einen parallel zu deren Längsachse verlaufenden Schlitz auf und auf beiden Seiten des Schlitzes jeweils eine Gewindebohrung und ein Durchgangsloch zur Aufnahme einer Gewindeschraube.

Aus "bike workshop 1996", Seiten 354, 290 ist ein mit "Club Roost I-Beam Ahead" bezeichneter Lenkervorbau bekannt, der ein im Querschnitt rechteckiges Hohlprofilteil aufweist.

Aus der DE 18 09 842 U ist ein Lenkervorbau bekannt, bei dem die Höhe eines Hohlprofilteils kleiner ist als der Innendurchmesser eines Lenkerklemmkopfes.

Aus der WO 2010/018471 A1 ist ein Lenkervorbau bekannt, bei welchem der Lenkerklemmkopf als Gegenstück zwei Klemmbügel aufweist, die an ihren Enden jeweils ein Durchgangsloch aufweisen, und das einstückig mit dem Verbindungsteil ausgebildete Sitzteil vier Gewindebohrungen zur Aufnahme jeweils einer Gewindeschraube aufweist.

Statt Laufrädern von 26 Zoll werden bei Mountainbikes seit einiger Zeit auch größere Laufräder von 29 Zoll eingesetzt. Allerdings gelangen hierdurch sämtliche Teile des Fahrrades in eine etwas höhere Position.

Um diesen Effekt zumindest teilweise auszugleichen, wird gemäß der Erfindung ein Lenkervorbau mit den im Patentanspruch 1 angegeben Merkmalen vorgeschlagen, bei welchem die Oberseite des einstückig mit dem Verbindungsteil ausgebildeten Lenkerklemmkopfes höchstens 2 mm höher liegt als die Oberseite des Verbindungsteils oder fluchtend mit der Oberseite des Verbindungsteils ausgebildet ist. Gegenüber der bisherigen symmetrischen Anordnung von Verbindungsteil und Lenkerklemmkopf ist daher bei der Erfindung eine unsymmetrische Anordnung vorhanden, bei welcher der Lenkerklemmkopf gegenüber dem Verbindungsteil nach unten versetzt angeordnet ist.

Begriffe wie oben, unten, vorne und hinten beziehen sich hierbei auf ein Fahrrad im normalen Fahrzustand auf einem Weg oder einer Straße, wobei der Blick des Fahrers nach vorne gerichtet ist.

Bei der Erfindung ist das Verbindungsteil als im Querschnitt rechteckiges Hohlprofilteil ausgebildet, dessen Breite größer als die Höhe ist, wobei bei einer Ausführungsform die Breite etwa das Doppelte der Höhe beträgt. Hierdurch ergibt sich eine besonders schlanke Bauweise.

Bei der Erfindung ist die Höhe des Hohlprofilteils kleiner als der Innendurchmesser des Lenkerklemmkopfes. Bei einem Innendurchmesser des Lenkerklemmkopfes von 31,8 Millimeter (1,5 Zoll) liegt dann die Längsmittelachse des Lenkerklemmkopfes etwa auf Höhe der Unterseite des Verbindungsteils, so dass sich ein sehr deutlicher Versatz von Lenkerklemmkopf und Verbindungsteil ergibt.

Bei der Erfindung beträgt die Höhe des Hohlprofilteils etwa zwei Drittel (2/3) des Innendurchmessers des Lenkerklemmkopfes.

Bei einer weiteren Ausführungsform der Erfindung besteht der Lenkervorbau aus einer hochfesten Aluminiumlegierung, und kann der Lenkervorbau durch einen 3D-Schmiede-Umformungsprozess hergestellt werden. Selbstverständlich sind jedoch auch andere Materialien möglich.

Bei einer weiteren Ausführungsform der Erfindung beträgt die Wandstärke des Hohlprofilteils etwa 2 Millimeter. Dies ist ausreichend zur Bereitstellung einer ausreichenden Stabilität, wenn eine hochfeste Aluminiumlegierung eingesetzt wird, sorgt aber trotzdem für eine Gewicht sparende Bauweise.

Bei einer weiteren Ausführungsform der Erfindung beträgt der Winkel der Abwinkelung des Verbindungsteils gegenüber der Gabelschaftsklemmung 18 Grad ± 2 Grad, bevorzugt 18 Grad ± 1 Grad. Hierbei wird es üblicherweise als Abwinkelung von 0 Grad angesehen, wenn sich das Verbindungsteil senkrecht zur Gabelschaftsachse, also zur Längsmittelachse der Gabelschaftsklemmung, erstreckt. Bei einer derartigen Abwinkelung von 18 Grad ist daher das Verbindungsteil nach unten um 18 Grad abgewinkelt, wodurch der Lenkerklemmkopf relativ weit nach unten gelangt.

Bei einer weiteren Ausführungsform der Erfindung weist die Gabelschaftsklemmung einen parallel zu deren Längsachse verlaufenden Schlitz auf, und auf beiden Seiten des Schlitzes sind jeweils eine Gewindebohrung und ein Durchgangsloch zur Aufnahme einer Gewindeschraube vorgesehen. Dann wird also eine Gewindeschraube von der einen Seite des Schlitzes aus eingedreht, und eine zweite Gewindeschraube von der entgegengesetzten Seite des Schlitzes aus. Hierdurch lässt sich ein gleichmäßiges und sicheres Festklemmen erzielen.

Grundsätzlich ist für den Lenkerklemmkopf nur ein einziges Gegenstück erforderlich. Bei einer Ausführungsform der Erfindung weist der Lenkerklemmkopf als Gegenstück jedoch zwei Klemmbügel auf, die an ihren Enden jeweils ein Durchgangsloch aufweisen, und weist das einstückig mit dem Verbindungsteil ausgebildete Sitzteil des Lenkerklemmkopfes vier Gewindebohrungen zur Aufnahme jeweils einer Gewindeschraube auf.

Bei einer weiteren Ausführungsform der Erfindung ist für jede Gewindeschraube ein O-Ring vorgesehen. Dieser ist beim Lenkerklemmkopf zwischen dem jeweiligen Bügel und dem einstückig mit dem Verbindungsglied ausgebildeten Sitzteil des Lenkerklemmkopfes angeordnet. Entsprechendes gilt für die den Schlitz der Gabelschaftsklemmung durchragenden Gewindeschrauben. Hierdurch lässt sich ein gleichmäßiges Anziehen der Gewindeschrauben beim Festklemmen sicherstellen.

Bei einer weiteren Ausführungsform der Erfindung ist das einstückig mit dem Verbindungsteil ausgebildete Sitzteil des Lenkerklemmkopfes als Schnappsitz ausgebildet, der einen zugehörigen Lenker mehr als 180 Grad umfasst. Dies erleichtert die Lenkermontage, da der Lenker durch Einschnappen in den Schnappsitz vorläufig gehaltert wird, und dann die Klemmbügel angebracht und mit den Gewindeschrauben festgezogen werden können.

Die Erfindung wird nachstehend anhand zeichnerisch dargestellter Ausführungsbeispiele näher erläutert, aus welchen weitere Vorteile und Merkmale hervorgehen. Es zeigt:
- Fig. 1(a): eine Ansicht eines Hauptteils eines Lenkervorbaus schräg von hinten / oben,
- Fig. 1(b): eine entsprechende Ansicht von unten, und
- Fig. 1(c): eine entsprechende Ansicht schräg von vorne / oben;

- Fig. 2(a): eine Ansicht des Hauptteils von vorne,
- Fig. 2(b): eine entsprechende Seitenansicht, und
- Fig. 2(c): eine entsprechende Ansicht von hinten;
- Fig. 3(a): eine Ansicht des Hauptteils schräg von hinten / unten,
- Fig. 3(b): eine entsprechende Ansicht von oben, und
- Fig. 3(c): eine entsprechende Ansicht schräg von vorne / unten;
- Fig. 4(a): eine Ansicht eines Lenkervorbaus schräg von hinten / oben,
- Fig. 4(b): eine entsprechende Ansicht von unten, und
- Fig. 4(c): eine entsprechende Ansicht schräg von vorne / oben;
- Fig. 5(a): eine Ansicht des Lenkervorbaus von vorne,
- Fig. 5(b): eine entsprechende Seitenansicht, und
- Fig. 5(c): eine entsprechende Ansicht von hinten; und
- Fig. 6(a): eine Ansicht des Lenkervorbaus schräg von hinten / unten,
- Fig. 6(b): eine entsprechende Ansicht von oben, und
- Fig. 6(c): eine entsprechende Ansicht schräg von vorne / unten.

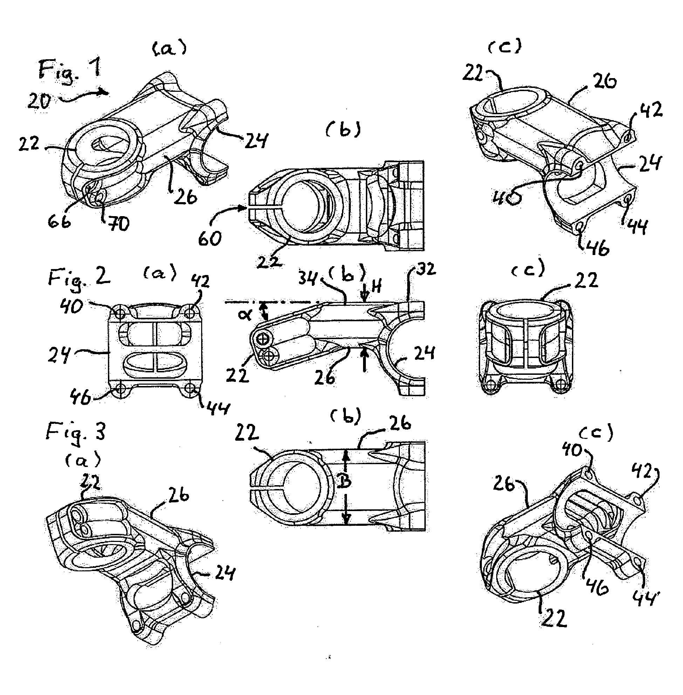

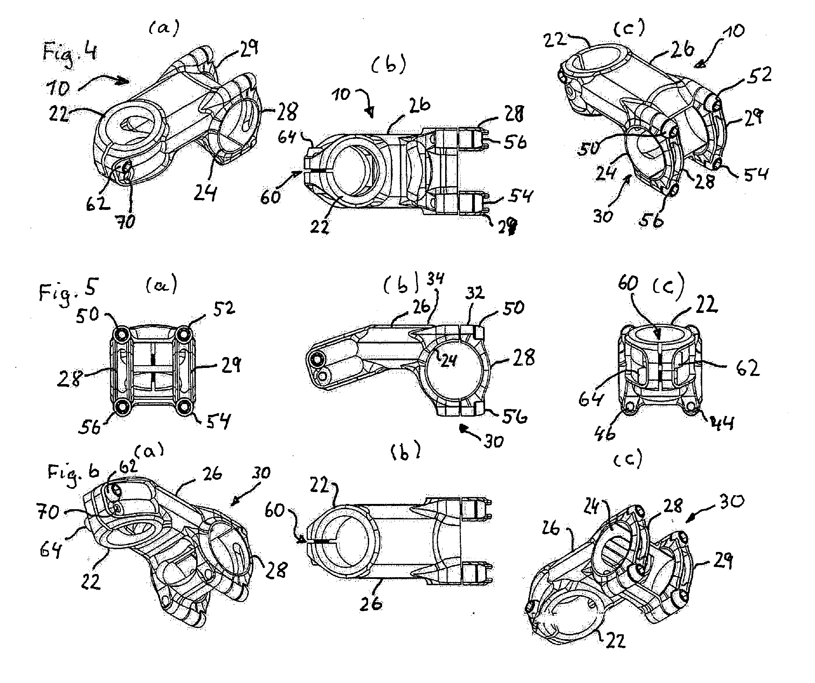

In den Figuren 1 bis 3 ist ein einstückig ausgebildetes Hauptteil 20 eines in den Fig. 4 bis 6 dargestellten vollständigen Lenkervorbaus 10 dargestellt.

Das in den Fig. 1 bis 3 dargestellte einstückige Hauptteil 20 weist eine Gabelschaftsklemmung 22 auf, ein als Schnappsitz ausgebildetes Sitzteil 24 eines Lenkerklemmkopfes (in den Figuren 4 bis 6 mit dem Bezugszeichen 30 bezeichnet), und ein Verbindungsteil 26, welches die Gabelschaftsklemmung 22 mit dem Sitzteil 24 des Lenkerklemmkopfes verbunden. Die Gabelschaftsklemmung 22 ist mit einem Schlitz 60 (Fig. 2(b)) versehen, der mit Gewindeschrauben verengt werden kann, die wie in Fig. 1(a) gezeigt von der rechten Seite in ein Durchgangsloch 66 eingesetzt und auf der anderen Seite des Schlitzes durch eine entsprechende Gewindebohrung aufgenommen werden, bzw. von der linken Seite des Schlitzes aus in ein Durchgangsloch eingesetzt und dann in eine Gewindebohrung 70 eingeschraubt werden.

Fig. 2(c) zeigt, dass der Sitzteil (Schnappsitz) 24 des Lenkerklemmkopfes vier Gewindebohrungen 40, 42, 44, 46 aufweist, in die wie in Fig. 4(c) gezeigt Gewindeschrauben 50, 52, 54, 56 eingedreht werden können, um zwei Klemmbügel 28, 29 zu befestigen, die als Gegenstück zum Sitzteil (Schnappsitz) 24 des Lenkerklemmkopfes dienen.

Fig. 2(b) zeigt die Höhe (H) des Verbindungsteils 26 sowie den Winkel α von 18°, um welchen das Verbindungsteil 26 gegenüber der Mittellängsachse der Gabelschaftsklemmung 22 und daher auch gegenüber dem nicht dargestellten Gabelschaft abgewinkelt ist.

Fig. 3(b) zeigt die Breite (B) des Verbindungsteils 26. Hierbei ist das Verbindungsteil 26 als im Querschnitt rechteckiges Hohlprofilteil ausgebildet, dessen Breite (B) etwa das Doppelte der Höhe (H) beträgt. Bei einer Wandstärke von etwa 2 mm des im Querschnitt rechteckigen Hohlprofilteils sind typische Werte für die Höhe (H) und die Breite (B) etwa 20 bzw. 40 mm.

Wie in den Fig. 2(b), 5(b) gezeigt ist die Höhe der Oberseite 32 des Lenkerklemmkopfes 30 gleich der Höhe der Oberseite 34 des Verbindungsteils 26, so dass die Oberseiten 32, 34 miteinander fluchten.

Typische Werte für den Innendurchmesser der Gabelschaftsklemmung 22 entsprechen denjenigen des Außendurchmessers von Gabelschaftrohren, also 25,4 mm für eine 1 Zoll-Gabel, 28,6 mm für eine 1 1/8 Zoll-Gabel, oder 38,1 mm für eine 1,5 Zoll-Gabel.

Auch die typischen Werte des Innendurchmessers des Lenkerklemmkopfes liegen in dem genannten Bereich zwischen 1 Zoll und 1,5 Zoll.

Fig. 4 verdeutlicht, wie der Schlitz 60 der Gabelschaftsklemmung durch zwei Gewindeschrauben 62, 64 von den entgegengesetzten Seiten des Schlitzes 60 aus verengt werden kann und somit eine Klemmung erfolgt. Dies ist auch in den anderen Ansichten der Fig. 5(c) und Fig. 6(a) gezeigt.

### Bezugszeichenliste

- 10: Lenkervorbau, Vorbau
- 20: Hauptteil
- 22: Gabelschaftsklemmung
- 24: Sitzteil des Lenkerklemmkopfes
- 26: Verbindungsteil
- 28: Klemmbügel
- 29: Klemmbügel
- 30: Lenkerklemmkopf
- 32: Oberseite des Lenkerklemmkopfes
- 34: Oberseite des Verbindungsteils
- 40: Gewindebohrung
- 42: Gewindebohrung
- 44: Gewindebohrung
- 46: Gewindebohrung
- 48: Gewindebohrung
- 50: Gewindeschraube
- 52: Gewindeschraube
- 54: Gewindeschraube
- 56: Gewindeschraube
- 58: Gewindeschraube
- 60: Schlitz (von 22)
- 62: Gewindeschraube
- 64: Gewindeschraube
- 66: Durchgangsloch
- 68: Durchgangsloch
- 70: Gewindebohrung
- 72: Gewindebohrung

## Patentansprüche

1. Lenkervorbau (10), der auf dem Gabelschaft der Gabel eines Fahrrades festklemmbar ist, und ein einstückig ausgebildetes Hauptteil (20) aufweist, das eine Gabelschaftsklemmung (22), ein Sitzteil (24) eines Lenkerklemmkopfes (30), und ein die Gabelschaftsklemmung (22) mit dem Sitzteil des Lenkerklemmkopfes verbindendes Verbindungsteil (26) aufweist, wobei das Verbindungsteil (26) gegenüber der Gabelschaftsklemmung um einen festen Winkel (α) abgewinkelt ist, zumindest ein Gegenstück (28, 29) für den Sitzteil (24) des Lenkerklemmkopfes vorgesehen ist, und die Oberseite (32) des Lenkerklemmkopfes (30) höchstens 2 mm höher liegt als die Oberseite (34) des Verbindungsteils (26) oder fluchtend mit der Oberseite des Verbindungsteils (26) ausgebildet ist, wobei das Verbindungsteil (26) als im Querschnitt rechteckiges Hohlprofilteil ausgebildet ist, dessen Breite (B) größer als dessen Höhe (H) ist, und die Höhe (H) des Hohlprofilteils etwa zwei Drittel (2/3) des Innendurchmessers des Lenkerklemmkopfes (24, 28, 29) beträgt.

2. Lenkervorbau nach Anspruch 1, bei welchem die Breite (B) etwa das Doppelte der Höhe (H) beträgt.

3. Lenkervorbau nach Anspruch 1 oder 2, bestehend aus einer hochfesten Aluminiumlegierung.

4. Lenkervorbau nach einem der Ansprüche 1 bis 3, bei welchem die Wandstärke des Hohlprofilteils etwa 2 mm beträgt.

5. Lenkervorbau nach einem der Ansprüche 1 bis 4, bei welchem der Winkel (α) zwischen dem Verbindungsteil (2b) und der Gabelschaftsklemmung (20) 18° ± 2° beträgt, bevorzugt 18° ± 1°.

6. Lenkervorbau nach einem der Ansprüche 1 bis 5, bei welchem die Gabelschaftsklemmung (22) einen parallel zu deren Längsachse verlaufenden Schlitz (60) aufweist und auf beiden Seiten des Schlitzes jeweils eine Gewindebohrung und ein Durchgangsloch zur Aufnahme einer Gewindeschraube aufweist.

7. Lenkervorbau nach einem der Ansprüche 1 bis 6, bei welchem der Lenkerklemmkopf (30) als Gegenstück zwei Klemmbügel (28, 29) aufweist, die an ihren Enden jeweils ein Durchgangsloch aufweisen, und das einstückig mit dem Verbindungsteil (26) ausgebildete Sitzteil (24) vier Gewindebohrungen zur Aufnahme jeweils einer Gewindeschraube aufweist.

8. Lenkervorbau nach Anspruch 7, bei welchem für jede Gewindeschraube ein O-Ring vorgesehen ist, der zwischen dem jeweiligen Klemmbügel (28, 29) und dem einstückig mit dem Verbindungsteil (26) ausgebildeten Sitzteil (24) des Lenkerklemmkopfes angeordnet ist.

9. Lenkervorbau nach einem der Ansprüche 1 bis 7, bei welchem das einstückig mit dem Verbindungsteil (26) ausgebildete Sitzteil (24) des Lenkerklemmkopfes (30) als Schnappsitz ausgebildet ist, der einen zugehörigen Lenker mehr als 180° umfasst.

## Claims

1. Handlebar stem (10) which is clampable in place on the steerer tube of the fork of a bicycle and comprises an integral main part (20) comprising a steerer tube clamp (22), a fitting part (24) of a handlebar clamping head (30) and a connecting part (26) which connects the steerer tube clamp (22) to the fitting part of the handlebar clamping head, wherein the connecting part (26) is angled about a fixed angle (α) with respect to the steerer tube clamp, at least one mating piece (28, 29) is provided for the fitting part (24) of the handlebar clamping head, and the top side (32) of the handlebar clamping head (30) is at most 2 mm higher than the top side (34) of the connecting part (26) or is flush with the top side of the connecting part (26), wherein the connecting part (26) is formed as a hollow profiled part having a rectangular cross section, the width (B) of which is greater than the height (H) thereof, and the height (H) of the hollow profiled part is approximately two thirds (2/3) of the inner diameter of the handlebar clamping head (24, 28, 29).

2. Handlebar stem according to claim 1, wherein the width (B) is approximately double the height (H).

3. Handlebar stem according to either claim 1 or claim 2, consisting of a high-strength aluminium alloy.

4. Handlebar stem according to any of claims 1 to 3, wherein the wall thickness of the hollow profiled part is approximately 2 mm.

5. Handlebar stem according to any of claims 1 to 4, wherein the angle (α) between the connecting part (2b) and the steerer tube clamp (20) is 18° ± 2°, preferably 18° ± 1°.

6. Handlebar stem according to any of claims 1 to 5, wherein the steerer tube clamp (22) comprises a slot (60) extending in parallel with the longitudinal axis thereof, and, on either side of the slot, a threaded hole and a through-hole for receiving a threaded bolt.

7. Handlebar stem according to any of claims 1 to 6, wherein the handlebar clamping head (30) comprises two clamp straps (28, 29) as mating pieces, which each have a through-hole at the ends thereof, and the fitting part (24) formed integrally with the connecting part (26) comprises four threaded holes for receiving a threaded bolt in each case.

8. Handlebar stem according to claim 7, wherein an O-ring is provided for each threaded bolt and is arranged between the respective clamp strap (28, 29) and the fitting part (24), which is formed integrally with the connecting part (26), of the handlebar clamping head.

9. Handlebar stem according to any of claims 1 to 7, wherein the fitting part (24), which is formed integrally with the connecting part (26), of the handlebar clamping head (30) is formed as a snap fit that encompasses an associated handlebar over more than 180°.

## Revendications

1. Avant-corps de guidon (10), qui est blocable sur le tube de la fourche d'une bicyclette et présente une partie principale (20) monobloc, qui comporte un blocage de tube de fourche (22), une partie de siège (24) d'une tête de blocage de guidon (30), et une partie d'assemblage (26) reliant le blocage du tube de fourche (22) à la partie de siège de la tête de blocage de guidon, la partie d'assemblage (26) étant coudée d'un angle fixe (α) par rapport au blocage du tube de fourche, au moins un pendant (28, 29) étant prévu pour la partie de siège (24) de la tête de blocage de guidon, et le côté supérieur (32) de la tête de blocage de guidon (30) étant plus haut de 2 mm au maximum que le côté supérieur (34) de la partie d'assemblage (26) ou étant en alignement avec le côté supérieur de la partie d'assemblage (26), la partie d'assemblage (26) étant réalisée sous forme de partie profilée creuse de section transversale rectangulaire, dont la largeur (B) est plus grande que sa hauteur (H), et la hauteur (H) de la partie profilée creuse représentant à peu près deux tiers (2/3) du diamètre intérieur de la tête de blocage de guidon (24, 28, 29).

2. Avant-corps de guidon selon la revendication 1, dans lequel la largeur (B) est à peu près égale au double de la hauteur (H).

3. Avant-corps de guidon selon l'une des revendications 1 et 2, constitué d'un alliage d'aluminium à hautes performances.

4. Avant-corps de guidon selon l'une des revendications 1 à 3, dans lequel l'épaisseur de paroi de la partie profilée creuse est à peu près égale à 2 mm.

5. Avant-corps de guidon selon l'une des revendications 1 à 4, dans lequel l'angle (α) entre la partie d'assemblage (2b) et le blocage du tube de fourche (20) est égal à 18° ± 2°, de préférence à 18°± 1°.

6. Avant-corps de guidon selon l'une des revendications 1 à 5, dans lequel le blocage du tube de fourche (22) présente une fente (60) parallèle à l'axe longitudinal de ce dernier et, sur chacun des deux côtés de la fente, un trou taraudé et un trou de passage pour recevoir une vis filetée.

7. Avant-corps de guidon selon l'une des revendications 1 à 6, dans lequel la tête de blocage de guidon (30) présente en tant que pendant deux étriers de serrage (28, 29), qui comportent chacun à leurs extrémités un trou de passage, et la partie de siège (24), de réalisation monobloc avec la partie d'assemblage (26), présente quatre trous taraudés pour recevoir chacun une vis filetée.

8. Avant-corps de guidon selon la revendication 7, dans lequel il est prévu pour chaque vis filetée un joint torique, disposé entre l'étrier de serrage respectif (28, 29) et la partie de siège (24), de réalisation monobloc avec la partie d'assemblage (26), de la tête de blocage de guidon.

9. Avant-corps de guidon selon l'une des revendications 1 à 7, dans lequel la partie de siège (24), de réalisation monobloc avec la partie d'assemblage (26), de la tête de blocage de guidon (30) est réalisée sous forme de siège encliquetable, qui entoure de plus de 180° un guidon correspondant.
